# EUROPEAN PATENT SPECIFICATION

(11) **EP 3 352 369 B1**
(45) Date of publication and mention of the grant of the patent: **02.08.2023**
(21) Application number: 16845980.8
(22) Date of filing: 12.01.2016
(51) Int. Cl.: H02P 27/08, H02P 21/00

(54) **INVERTER CONTROL DEVICE**
UMRICHTERSTEUERUNGSVORRICHTUNG
DISPOSITIF DE COMMANDE D'ONDULEUR

(30) Priority: 18.09.2015 JP 2015185743
(43) Date of publication of application: 25.07.2018
(73) Proprietor: Sinfonia Technology Co., Ltd., Tokyo 105-8564 (JP)
(72) Inventor: HAMAGUCHI, Yuichi, Tokyo 105-8564 (JP)
(74) Representative: Grünecker Patent- und Rechtsanwälte PartG mbB
(86) International application number: PCT/JP2016/050718
(87) International publication number: WO 2017/047106

(56) References cited:
- JP-A- 2000 050 686
- JP-A- 2003 244 990
- JP-A- 2004 072 954
- JP-A- 2007 135 343
- US-A1- 2003 155 878

## Description

### TECHNICAL FIELD

The present invention relates to an inverter control device.

### BACKGROUND ART

In a case of driving an AC motor using a DC power supply, an inverter is used. The inverter includes a plurality of switching elements such as transistors, and converts direct current into alternating current. To control the operation of the plurality of switching elements of the inverter, an inverter control device is used.

PWM (pulse width modulation) control is typically used for inverter control. In the PWM control, AC current supplied to the AC motor is a sine wave, thereby making it possible to smoothly rotate the AC motor at low speed rotation.

However, the modulation rate of PWM control is approximately 0.6, which is lower than the modulation rate of one-pulse control described later. When the PWM control is used, there is a problem that the upper limit for an AC voltage obtained from a voltage of the DC power supply is lowered and the output of the AC motor is reduced. In other words, when the PWM control is used, it is difficult to rotate the AC motor at a high speed.

Besides the PWM control, One-pulse control is used for controlling an inverter. The one-pulse control has a higher modulation rate than the PWM control, thereby making it possible to rotate the AC motor at a high speed. The number of switching times of the inverter in one-pulse control is smaller than the number of switching in the PWM control. Thus, switching loss can be reduced in one-pulse control. However, the one-pulse control drives an inverter using a rectangular wave, and thus there is a problem that the loss due to the harmonic components included in the rectangular wave increases.

It has been conventionally practiced to improve the efficiency of the AC motor by switching between the PWM control and the one-pulse control depending on the rotation speed and torque of the AC motor.

For example, Patent Document 1 discloses a drive control device for an AC motor that executes PWM voltage phase control in switching from the PWM control to the one-pulse control. More specifically, in switching from the PWM control to the one-pulse control, the drive control device switches from the one-pulse control to the PWM voltage phase control, and then switches from the PWM voltage phase control to the one-pulse control. The PWM voltage phase control controls the AC current by changing the amplitude and frequency of the AC voltage. This reduces a torque shock that occurs in switching from the PWM control to the one-pulse control. Note that even when the one-pulse control is switched to the PWM control, the PWM voltage phase control is executed.

Patent Document 1: Japanese Unexamined Patent Publication No. 2000-50686

US 2003/155878 A1 relates to control of an AC motor, wherein a waveform combining a sine wave and a rectangular wave is used for generating drive signals for given rotation speed and torque of the motor.

JP 2000 050686 A relates to control of an AC motor, wherein the driving of the motor is changed by increasing a sine wave amplitude during pulse width modulation.

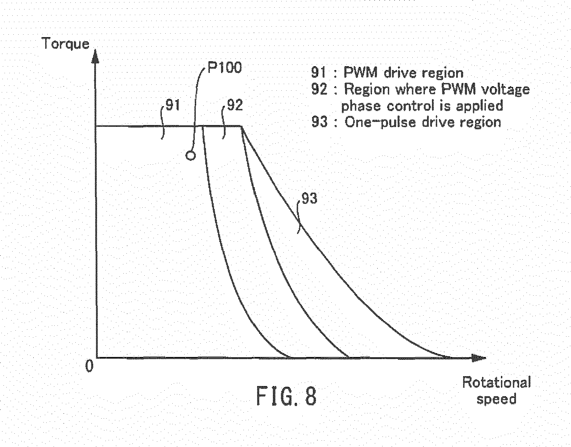

In a case of executing the drive control device according to Patent Document 1, drive regions for executing each of the PWM control, the PWM voltage phase control, and the one pulse control are each preset. Fig. 8 is a map schematically showing drive regions where the PWM control, the PWM voltage phase control, and the one pulse control are each applied in the drive control device according to Patent Document 1.

Referring to FIG. 8, a region 91 is a driving region where PWM control is applied. A region 92 is a drive region where the PWM voltage phase control is applied. A region 93 is a driving region where one-pulse control is applied. The drive regions where the above three types of control methods are applied are fixed, thus making it impossible to execute one-pulse control in the region 91, for example.

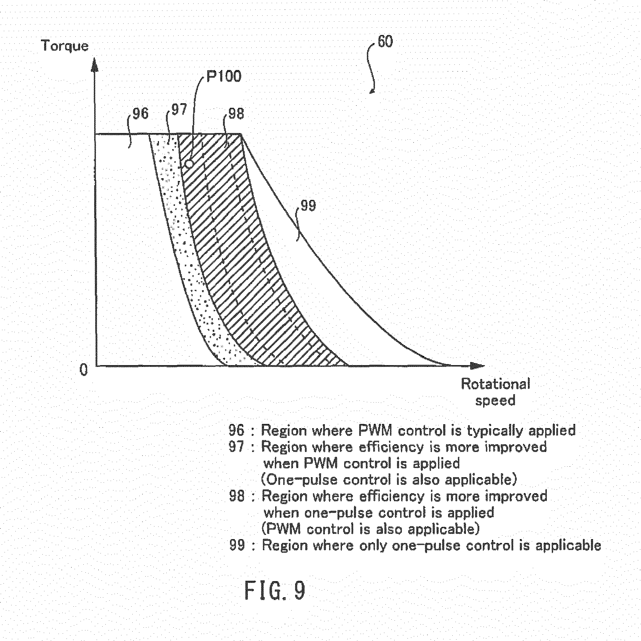

Actually, the drive region where the PWM control can be applied overlaps with the drive region where the one pulse control can be applied. FIG. 9 is a map schematically showing a drive region where the PWM control can be applied and a drive region where the one-pulse control can be applied. In the map 60 shown in FIG. 9, a region 96 is a drive region where PWM control is typically applied and a region 99 is a drive region where only one-pulse control can be applied. In the region 96, it is possible to apply one pulse control, but it is not supposed to apply one- pulse control. Regions 97 and 98 are drive regions where both PWM control and one-pulse control is assumed to be applied. However, the region 97 is a region where the PWM control is more efficient than the one-pulse control, and the region 98 is a region where the one-pulse control is more efficient than the PWM control. Thus, in a case of driving the AC motor at a point P100 shown in FIG. 9, both the PWM control and the one pulse-control can be applied, but applying the one-pulse control making it possible to drive the AC motor with high efficiency. The broken lines shown in FIG. 9 are lines that divide the region 91 to 93 shown in FIG. 8.

In a case of the drive control device according to Patent Document 1, as described above, the drive regions where the PWM control, the PWM voltage phase control, and the one pulse control are each applied are fixed. The position of the point P100 is in the region 91 in FIG. 8. In the drive control device according to Patent Document 1, even when the AC motor is driven at the point P100, the PWM control must be used. In this way, there is a problem that the efficiency of the AC motor may be lowered by fixing the drive region of the PWM control and the one-pulse control in some cases.

An object of the present invention is to provide an inverter control device capable of further improving efficiency in driving a motor by switching between PWM control and one-pulse control.

The invention is defined by the independent claim. The dependent claims describe advantageous embodiments.

According to an embodiment of the present invention, the inverter control device controls an inverter that generates the three-phase alternating current for driving a motor.

The inverter control device includes a PWM controller that executes PWM control based on a torque command value of the motor to cause the inverter to generate the three-phase alternating current;
a one-pulse controller that executes one-pulse control based on the torque command value to cause the inverter to generate the three phase alternating current; and
a switching controller that alternately switches the PWM control and the one-pulse control in a switching period with a preset time length for switching the control of the inverter from the PWM control to the one-pulse control, and controls the PWM controller and the one-pulse controller so that the one-pulse control is executed after a lapse of the switching period, wherein
the switching controller controls the PWM controller and the one-pulse controller by, in the switching period, gradually increasing a ration of the period during which one-pulse control is executed;
an output switching unit, wherein
the PWM controller outputs a PWM signal to the output switching unit,
the one-pulse controller outputs a rectangular wave signal to the output switching unit (15),
the switching controller outputs switching signals to the output switching unit for instructing the output switching unit for outputting one of the PWM signal and the rectangular wave signal,
the PWM signal and the rectangular wave signal are alternately switched in the switching period, and
based on the switching signals, the output switching unit outputs either the PWM signal or the rectangular wave signal to the inverter.

When switching control of the inverter from the PWM control to the one-pulse control, the switching controller alternately switches the PWM control and the one-pulse control in the switching period. At the time of switching, control other than PWM control and one-pulse control is not used.

If, in the driving region showing the relationship between the torque of the motor and the rotational speed, a point determined by the torque and rotational speed of the motor is in a region where both the PWM control and the one-pulse control can be applied, the inverter control device can switch from PWM control to one-pulse control, thereby enhancing efficiency for driving the motor.

In addition, it is possible to alleviate the imbalance in the current of the three-phase alternating current in the inverter when the one-pulse control is executed after the switching period has elapsed, thus reducing a torque shock that occurs when the PWM control is switched to the one-pulse control.

In the inverter control device, an instruction by the switching controller may be made in a predetermined order for each phase included in the three-phase alternating current.

This prevents all the phases included in the three-phase alternating current from being switched from the PWM control to the one-pulse control at the same timing in the switching period.

This makes it possible to further alleviate the unbalance of the current of the three-phase alternating current in the inverter, thus making it possible to further reduce the torque shock occurring when the PWM control is shifted to the one-pulse control.

Gradually lengthening the period during which the one-pulse control is executed in the switching period makes it possible to further reduce the torque shock occurring in the switching period.

The PWM controller may generate a first voltage target value used for the PWM control and a second voltage target value used for the one-pulse control based on the torque command value, and may gradually change, in the switching period, the first voltage target value to the second voltage target value.

This makes it possible to reduce a deviation between the phase of the three-phase alternating current generated by executing the PWM control and the phase of the three-phase alternating current generated by executing the one-pulse control, so that the torque shock occurring in the switching period is further reduced.

The inverter control device may further include an initial phase table that stores the torque command value and an initial phase value of the rectangular wave signal at a timing of starting the one-pulse control in association with each other. The one-pulse controller may determine a phase of the rectangular wave signal based on the initial phase value corresponding to the torque command value at the timing of ending the switching period and may determine, after the elapse of the switching period, a phase of the rectangular wave signal based on the torque command value, a detected value of the torque of the motor, and the initial phase value corresponding to the torque command value.

This makes it possible to reduce an error between the torque command value and the torque of the motor when the one-pulse control is started after the switching period has elapsed, so that the torque shock occurring after the switching period has elapsed can be reduced.

According to the present invention, when the motor is driven by switching the PWM control and one-pulse control, efficiency is further improved.

### BRIEF DESCRIPTION OF THE DRAWINGS

FIG. 1 is a functional block diagram showing a configuration of a motor control system according to an embodiment of the present invention.
FIG. 2 is a functional block diagram showing the configuration of an inverter control device shown in FIG. 1.
FIG. 3 is a diagram showing a time relationship of a PWM signal, a rectangular wave signal, and a switching signal generated by the inverter control device shown in FIG. 1.
FIG. 4 is a view showing a current vector calculated in executing PWM control in dq coordinates space.
FIG. 5 is a diagram showing voltage vectors calculated in executing one-pulse control in dq coordinates space.
FIG. 6 is a diagram showing changes in a q-axis component of a voltage target value when the inverter control device shown in FIG. 1 executes switching control.
FIG. 7 is a diagram showing changes in a d-axis component of a voltage target value when the inverter control device shown in FIG. 1 executes switching control.
FIG. 8 is a map showing drive regions of PWM control, PWM voltage phase control, and one pulse control in a conventional inverter control device.
FIG. 9 is a map showing a drive region where both PWM control and one-pulse control can be applied.

### DESCRIPTION OF THE PREFERRED EMBODIMENTS

Hereinafter, embodiments of the present invention will be described in detail with reference to the drawings. Identical or corresponding parts in the figures are denoted by the same reference numerals, and description thereof will not be repeated.

### { 1. Configuration of Motor Control System 100}

### (Overall structure)

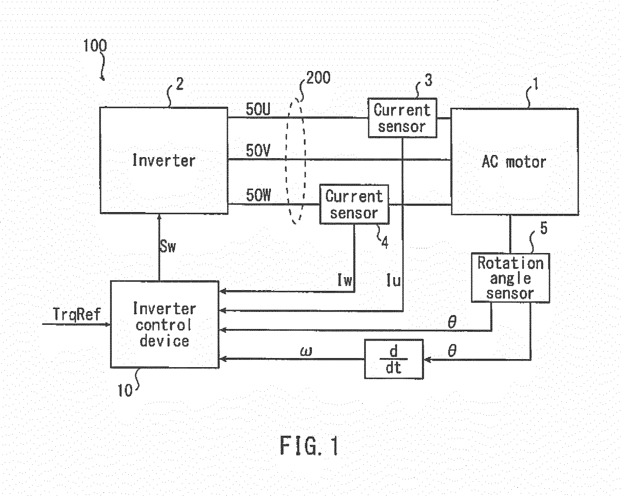

FIG. 1 is a functional block diagram showing a configuration of a motor control system 100 according to an embodiment of the present invention. Referring to FIG. 1, the motor control system 100 includes an AC motor 1, an inverter 2, current sensors 3 and 4, a rotation angle sensor 5, and an inverter control device 10. In the motor control system 100, the inverter control device 10 controls the inverter 2 by executing one of PWM control and-one pulse control.

The AC motor 1 is an IPM (Interior Permanent Magnet) motor, and is driven by a three-phase alternating current 200 supplied from the inverter 2. The three-phase alternating current 200 has a U-phase 50U, a V-phase 50V, and a W-phase 50W.

The inverter 2 switches ON/OFF of a switching element (not shown) such as a transistor based on a switching signal Sw inputted from the inverter control device 10, thereby obtaining the three-phase alternating current 200.

The current sensor 3 is disposed on the wiring for providing the U-phase 50U from the inverter 2 to the AC motor 1, and detects the current of the U-phase 50U. The current sensor 3 outputs a current detection value Iu to the inverter control device 10 as a detection result of the current of U-phase 50U.

The current sensor 4 is disposed on the wiring for providing the W-phase 50W from the inverter 2 to the AC motor 1, and detects the current of the W-phase 50W. The current sensor 4 outputs a current detection value Iw to the inverter control device 10 as a detection result of the current of the W-phase 50W.

The rotation angle sensor 5 is, for example, a resolver, a Hall element or the like, and detects the rotation position 0 of a rotor (not shown) included in the AC motor 1. Furthermore, the rotational speed ω of the rotor is calculated based on the detected rotational position θ. The detected rotational position 0 and the calculated rotational speed ω are inputted to the inverter control device 10.

Based on a torque command value TrqRef, the inverter control device 10 executes one of PWM control and one-pulse control to control the inverter 2. In order to control the inverter 2, the inverter control device 10 generates a switching signal Sw in accordance with the torque command value TrqRef and outputs it to the inverter 2.

### (Configuration of Inverter Control Device 10)

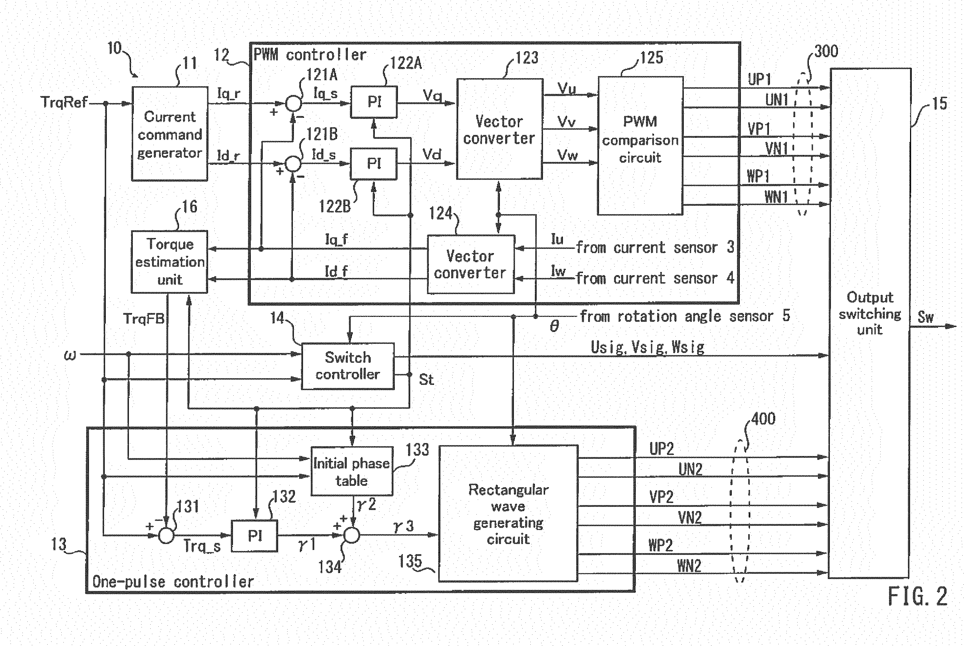

FIG. 2 is a functional block diagram showing the configuration of the inverter control device 10 shown in FIG. 1. As shown in FIG. 2 , the inverter control device 10 includes a current command generation unit 11, a PWM controller 12, a one-pulse controller 13, a switching controller 14, an output switching unit 15, and a torque estimation unit 16.

The current command generation unit 11 generates the current target values Id_r and Iq_r based on the torque command value TrqRef inputted to the inverter control device 10. The current target value Id_r is the d-axis component of the current target value in the dq coordinates space. The current target value Iq_r is the q-axis component of the current target value.

Using the current target values Id_r and Iq_r, the PWM controller 12 generates a PWM signal 300 for driving the inverter 2 by PWM control. The PWM signal 300 has PWM signals UP1, UN1, VP1, VN1, WP1, and WN1. Details of the configuration of the PWM controller 12 will be described later.

The PWM signals UP 1 and UN 1 have phases opposite to each other and are used in the inverter 2 to generate a current of U-phase 50 U. The PWM signals VP1 and VN1 have phases opposite to each other, and are used in the inverter 2 to generate a current of V-phase 50V. The PWM signals WP1 and WN1 have phases opposite to each other and are used in the inverter 2 to generate a current of W-phase 50W.

The one-pulse controller 13 generates a rectangular wave signal 400 for driving the inverter 2 by one-pulse control based on the torque command value TrqRef. The rectangular wave signal 400 has rectangular wave signals UP2, UN2, VP2, VN2, WP2, and WN 2. Details of the configuration of the one-pulse controller 13 will be described later.

The rectangular wave signals UP2 and UN2 have phases opposite to each other and are used in the inverter 2 to generate a current of the U-phase 50 U. The rectangular wave signals VP2 and VN2 have phases opposite to each other and are used in the inverter 2 to generate a current of V-phase 50V. The rectangular wave signals WP2 and WN2 have phases opposite to each other and are used in the converter 2 to generate a current of W-phase 50W.

The switching controller 14 determines whether to control the inverter 2 by executing the PWM control or the one-pulse control, and then outputs switching signals Usig, Vsig, and Wsig corresponding to the determination to the output switching unit 15. The switching signals Usig, Vsig and Wsig correspond to the U-phase, the V-phase, and the W-phase, respectively, and are signals for instructing for outputting one of the PWM signal corresponding to each phase and the rectangular wave signal corresponding to each phase.

Further, when the control of the inverter 2 is switched from the PWM control to the one-pulse control, the switching controller 14 alternately switches the PWM control and the one-pulse control in the switching period and controls the PWM controller 12 and the one-pulse controller 13 so that the one-pulse control is executed after the switching period has elapsed.

Based on the switching signals Usig, Vsig, Wsig inputted from the switching controller 14, the output switching unit 15 outputs either the PWM signal 300 corresponding to each phase or the rectangular wave signal 400 corresponding to each phase, as the switching signal Sw, to the inverter 2.

The torque estimation unit 16 calculates a torque estimation value TrqFB generated in the AC motor 1 based on the current detection values Id_f and Iq_f generated from the current detection values Iu and Iw by a vector conversion unit 124, which will be described later. The torque estimation unit 16 then outputs the calculated torque estimation value TrqFB to the one-pulse controller 13.

### (Configuration of PWM controller 12)

The PWM controller 12 includes subtracters 121A and 121B, PI control units 122A and 122B, vector converters 123 and 124, and a PWM comparison circuit 125.

The subtracter 121A subtracts the current detection value Iq_f from the current target value Iq_r, and then outputs the current difference value Iq_s. The subtracter 121B subtracts the current detection value Id_f from the current target value Id_r, and then outputs the current difference value Id_s.

The PI control unit 122 A executes the PI control to generate the voltage target value Vq from the current difference value Iq_s. The PI control unit 122 B executes the PI control to generate the voltage target value Vd from the current difference value Id_s.

The vector converting unit 123 converts the two-phase voltage target values Vd and Vq into three-phase voltage target values Vu, Vv, and Vw with reference to the rotational position θ detected by the rotation angle sensor 5. Voltage target values Vu, Vv, and Vw correspond to U-phase 50U, V-phase 50V, W-phase 50W, respectively. Each of the voltage target values Vu, Vv, and Vw is a sinusoidal wave.

The PWM comparison circuit 125 generates the PWM signal 300 from the voltage target values Vu, Vv, and Vw. More specifically, the PWM comparison circuit 125 compares the voltage target value Vu with a carrier (not shown), thereby generating the PWM signals UP1 and UN1. Similarly, the PWM comparison circuit 125 generates the PWM signals VP1 and VN1 from the voltage target value Vv, and generates the PWM signals WP1 and WN 1 from the voltage target value Vw.

The vector conversion unit 124 generates current detection values Id_f and Iq_f from the current detection values Iu and Iw outputted from the current sensors 3 and 4, respectively. When the current detection values Id_f and Iq_f are generated, the rotational position θ detected by the rotation angle sensor 5 is referred to.

### (Configuration of One-pulse controller 13)

The one-pulse controller 13 includes a subtracter 131, a PI control unit 132, an initial phase table 133, an adder 134, and a rectangular wave generating circuit 135.

The subtracter 131 subtracts the torque estimation value TrqFB from the torque command value TrqRef, and then outputs a torque difference value Trq_s. The PI control unit 132 executes the PI control to calculate a phase target value γ1 from the torque difference value Trq_s.

The initial phase table 133 stores an initial phase values γ2 of the rectangular wave signal 400 when the one-pulse control is started upon completion of the switching period. The initial phase values γ2 is stored in association with the torque command values TrqRef. When the one-pulse control is started after the end of the switching period, the initial phase table 133 outputs the initial phase value γ2 corresponding to the torque command value TrqRef to the adder 134.

The adder 134 adds the initial phase value γ2 to the phase target value γ1 and then outputs the voltage phase value γ3 obtained by the addition to the rectangular wave generating circuit 135. The rectangular wave generating circuit 135 generates a rectangular wave signal 400 whose phase is adjusted based on the voltage phase value γ3, and then outputs it to the output switching unit 15.

### {2. Operation of Inverter control device 10}

For the operation of the inverter control device 10, a case of starting to rotate the AC motor, and a case of switching from the PWM control to the one-pulse control will be individually described as below.

### {2.1. Starting to rotate AC motor 1 }

Referring to FIG. 2, the torque command value TrqRef is inputted to the inverter control device 10 when AC motor 1 has been at a stop. In the inverter control device 10, the switching controller 14 inputs the torque command value TrqRef.

The switching controller 14 continuously monitors the rotation speed ω of the rotor.

In the switching controller 14, a map 60 showing the driving region of the PWM control and the driving region of the one-pulse control as shown in FIG. 9 is preset. The AC motor 1 has been at a stop, and therefore the rotation speed ω is zero. Referring to the map 60 shown in FIG. 9, the switching controller 14 determines that the point on the map determined by the rotation speed ω and the torque command value TrqRef is located in the region 96. As a result, the switching controller 14 determines to control the inverter 2 by executing the PWM control.

The switching controller 14 generates a control status signal St according to the above determination, and then outputs the control status signal St to the PWM controller 12, the one-pulse controller 13, and the torque estimation unit 16. The control status signal St is a signal indicating that the control of the inverter 2 is executed by one of PWM control, one-pulse control, and switching control. The control status signal St is "0" when PWM control is indicated, "2" when one-pulse control is indicated, and "1" when switching control is indicated. The switching control is executed during a switching period for switching from PWM control to one pulse control. Details of the switching control will be described later.

As described above, the switching controller 14 has determined to execute the PWM control, and thus the control status signal St is 0. When the control status signal St whose value is set to 0 is input, the PWM controller 12 starts to generate the PWM signal 300 based on the current target values Iq_r and Id_r generated by the current command generation unit 11. Conversely, when the control status signal St whose value is set to 0 is input, the one-pulse controller 13 waits without generating the rectangular wave signal 400. The torque estimation value TrqFB is not used by the one-pulse controller 13, and thus the torque estimation unit 16 waits without calculating the torque estimation value TrqFB.

In order to instruct to output the PWM signal 300, the switching controller 14 outputs the switching signals Usig, Vsig, and Wsig whose values are set to 1 to the output switching unit 15.

The switching signal Usig is 1 in instructing the output of the PWM signals UP1 and UN 1, whereas it is 0 in instructing the output of the rectangular wave signals UP2 and UN2. Similarly, the switching signal Vsig is 1 in instructing the output of the PWM signals VP1 and VN1, whereas it is 0 in instructing the output of the rectangular wave signals VP2 and VN 2. The switching signal Wsig is 1 in instructing the output of the PWM signals WP1 and WN1, whereas it is 0 in instructing the output of the rectangular wave signals WP2 and WN2.

Based on the switching signals Usig, Vsig, and Wsig inputted from the switching controller 14, the output switching unit 15 outputs the PWM signal 300 inputted from the PWM controller 12 to the inverter 2 as a switching signal Sw.

In this way, when determining to execute the PWM control, such as at the start of rotation of the AC motor 1, the inverter control device 10 executes the PWM control to cause the inverter 2 to generate the three-phase alternating current 200.
The AC motor 1 starts to be driven by the three-phase alternating current 200 supplied from the inverter 2.

### {2. 2. Switching from PWM control to one-pulse control}

### (2.2.1. Determination for switching}

The rotation speed ω of the AC motor 1 increases as time elapses after the AC motor 1 starts rotating. Furthermore, the torque command value TrqRef varies, for example, according to the operation of the device on which the AC motor 1 is mounted. Based on the rotation speed ω and the torque command value TrqRef, the switching controller 14 determines whether it is appropriate to use the PWM control or the one-pulse control. For this determination, the map 60 shown in FIG. 9 is used.

It is assumed that the point on the map 60 determined by the rotation speed ω and the torque command value TrqRef has moved to the point P100 at a certain point in time after the AC motor 1 starts rotating by the PWM control. The point P100 is located in the region 98 where both the PWM control and the one-pulse control can be used and the one-pulse control is more efficient than the PWM control. Thus, the switching controller 14 determines not to execute PWM control, which has been executing from the start of rotation of the AC motor 1, but to control the inverter 2 by one-pulse control.

In this case, the switching controller 14 does not immediately switch from the PWM control to the one-pulse control but executes the switching control for switching from the PWM control to the one-pulse control. In the switching control, PWM control and one-pulse control are alternately repeated in a switching period with a preset time length. The inverter control device 10 does not execute control other than PWM control and one-pulse control during the switching period.

The switching controller 14 changes the value of the control status signal St from 0 to 1 in order to notify the execution of the switching control. The control status signal St whose value is changed to 1 is outputted to the PWM controller 12, the one-pulse controller 13, and the torque estimation unit 16.

When receiving the control status signal St whose value is set to 1, the PWM controller 12 continues to generate the PWM signal 300. When receiving the control status signal St whose value is set to 1, the one-pulse controller 13 starts generating the rectangular wave signal 400.

When receiving the control status signal St whose value is set to 1, the torque estimation unit 16 waits without calculating the torque estimation value TrqFB in the switching control. The reason for this is that the one-pulse controller 13 executes, during the switching period, the open loop control, instead of executing the closed loop control using the torque estimation value TrqFB.

### {2.2.2. Operation of Switching Controller 14 in Switching Period}

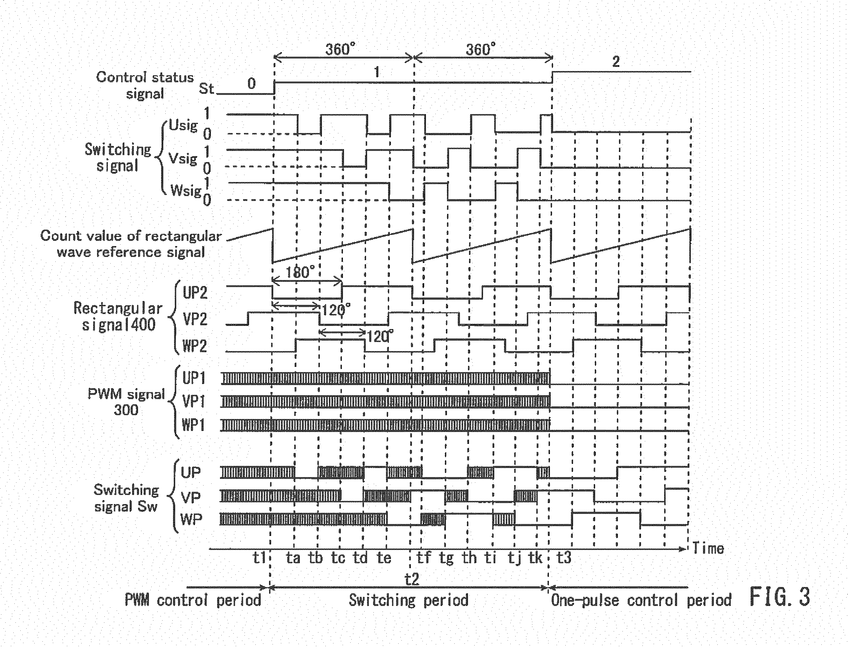

FIG. 3 is a diagram showing a correspondence relationship between a part of the PWM signal, a part of the rectangular wave signal 400, and a part of the switching signal Sw when the inverter control device 10 executes the switching control.

Referring to FIG. 3, a period before time t1 is a PWM control period during which the inverter control device 10 is executing PWM control. The period from the time t1 to the time t3 is the switching period during which the inverter control device 10 is executing the switching control. A period after time t3 is a one-pulse control period during which the inverter control device 10 is executing one-pulse control.

In FIG. 3, only rectangular wave signals UP2, VP2, and WP2 are depicted as a part of the rectangular wave signal 400. The rectangular wave signals UN2, VN2, WN2 differs from the rectangular wave signals UP2, VP2, WP2 only in that the rectangular wave signals UN2, VN 2, WN 2 respectively have phases opposite to the phases of the rectangular wave signals UP2, VP2, WP2, and thus showing the rectangular wave signals UN2, VN2, WN2 is omitted in FIG. 3. Furthermore, in FIG. 3, the rectangular wave signal 400 is generated during the PWM control period. This is for clearly showing the relationship between the phases of the rectangular wave signals UP2, VP2, and WP2, and does not means that the rectangular wave signal 400 is generated during the PWM control period.

As a part of the PWM signal 300, only the PWM signals UP1, VP1, and WP1 are depicted. The PWM signals UN1, VN1, WN1 differs from the PWM signals UP1, VP1, and WP1 only in that they respectively have phases opposite to the phases of the PWM signals UP1, VP1, and WP1, and thus showing the PWM signals UN1, VN1, WN1 is omitted. In FIG. 3, the PWM signals UP1, VP1, and WP1 are indicated by vertical stripe patterns, but these vertical lines do not indicate the rising and falling timings of these PWM signals.

In the switching signal Sw, the switching signal UP is generated by outputting a signal in accordance with the switching signal Usig among the PWM signal UP1 and the rectangular wave signal UP2 by the output switching unit 15. In the switching signal UP, the signal indicated by the vertical stripe corresponds to the PWM signal UP1. A signal indicated in plain (white) corresponds to the rectangular wave signal UP2. Similarly, the switching signal VP is generated by outputting a signal in accordance with the switching signal Vsig among the PWM signal VP1 and the rectangular wave signal VP2 by the output switching unit 15. The switching signal WP is generated by outputting a signal in accordance with the switching signal Wsig among the PWM signal WP1 and the rectangular wave signal WP2 by the output switching unit 15.

The operation of the inverter control device 10 that executes the switching control will now be described with reference to FIG. 3.

### (1) Period before time t1 (PWM control period)

Prior to the time t1, the switching controller 14 outputs the control status signal St, to which the value "0" instructing execution of the PWM control is set, to the PWM controller 12, the one-pulse controller 13, and the torque estimation unit 16. Based on the control status signal St, the PWM controller 12 generates the PWM signal 300 during the PWM control period.

The one-pulse controller 13 does not generate the rectangular wave signal 400 during the PWM control period. Furthermore, the PWM controller 12 does not use the torque estimation value TrqFB to generate the PWM signal 300; thus, the torque estimation unit 16 does not calculate the torque estimation value TrqFB during the PWM control period.

In the PMW control period, the switching controller 14 sets the values of the switching signals Usig, Vsig, and Wsig to 1 instructing the output of the PWM signal 300, and then outputs the values to the output switching unit 15. Thus, the output switching unit 15 outputs the PWM signal 300 outputted from the PWM controller 12 as the switching signal Sw to the inverter 2.

### (2) Period from time t1 to time t3 (switching period)

When the switching controller 14 determines to switch from the PWM control to the one-pulse control, the switching controller 14 sets the period from time t1 to time t3 as the switching period. The length of the switching period is a time corresponding to two cyclic periods of the rectangular wave signal 400. Note that the period from the time t1 to the time t2 and the period from the time t2 to the time t3 each correspond to a time corresponding to one cyclic period of the rectangular wave signal 400.

The switching period is equivalent to two cyclic periods of the rectangular wave signal 400, and thus the switching period is much shorter than a time scale at which the torque command value TrqRef is changed. Thus, in the following explanation, it is assumed that the change of the torque command value TrqRef does not occur within the switching period.

From time t1, the switching controller 14 outputs the control status signal St whose value is set to 1 to the PWM controller 12, the one-pulse controller 13, and the torque estimation unit 16, and then notifies execution of the switching control. As a result, the PWM controller 12 continues to generate the PWM signal 300 from the PWM control period. The one-pulse controller 13 starts to generate the rectangular wave signal 400 from the time t1. As described above, the torque estimation unit 16 does not calculate the torque estimation value TrqFB also during the switching period.

### First half of switching period

The switching controller 14 alternately switches the PWM control and the one-pulse control during the period from the time t1 to the time t2 (the first half of the switching period) such that a period for executing the one-pulse control becomes a period corresponding to a phase of 60 degrees of the rectangular wave signal 400. Hereinafter, unless otherwise specified, the phase of the rectangular wave signal 400 is simply referred to as "phase".

The timings at which PWM control and one-pulse control are switched are times ta to te, and t2. At the time t1, ta to te, and t2, an interval between two adjacent time points is a time corresponding to the phase of 60 degrees. In order to specify the times ta to te, and t2, the switching controller 14 uses a rectangular wave reference signal (not shown). The rectangular wave reference signal is a clock signal, and thus the switching controller 14 specifies a phase by counting the rectangular wave reference signal and specifies the timing at which the PWM control and the one-pulse control are alternately switched.

Hereinafter, the switching between the PWM control and the one-pulse control will be described with the output of the switching signal UP used for generating the U-phase 50U as an example.

When the output switching unit 15 outputs the PWM signal UP1 as the switching signal UP based on the switching signal Usig, it outputs the PWM signal UN1 together with the PWM signal UP1. Similarly, when the PWM signal VP1 is output as the switching signal VP, the PWM signal VN1 is outputted together with the PWM signal VP1. When the PWM signal WP1 is outputted as the switching signal WP, the PWM signal WN1 is outputted together with the PWM signal WPt.

When outputting the rectangular wave signal UP2 as the switching signal UP based on the switching signal Usig, the output switching unit 15 outputs the rectangular wave signal UN2 together with the rectangular wave signal UP2. Similarly, when the rectangular wave signal VP2 is outputted as the switching signal VP, the rectangular wave signal VN2 is outputted together with the rectangular wave signal VP2. When the rectangular wave signal WP 2 is outputted as the switching signal WP, the rectangular wave signal WP2 is output together with the rectangular wave signal WN2.

In the following description, descriptions for the outputs of the PWM signals UN1, VN1, WN1 and the outputs of the rectangular wave signals UN2, VN2, WN2 are omitted.

From the time t1 to the time ta, the switching controller 14 outputs the switching signal Usig (Usig = 1) instructing the output of the PWM signal UP1 to the output switching unit 15. As a result, from the time t1 to the time ta, the PWM signal UP1 is outputted from the output switching unit 15 to the inverter 2 as the switching signal UP. In other words, during the period from the time t1 to the time ta, the inverter 2 generates the current of U-phase 50U based on the PWM control.

At time ta, the switching controller 14 changes the value of the switching signal Usig to 0 instructing the output of the rectangular wave signal UP2. In accordance with the change of the switching signal Usig, the output switching unit 15 outputs the rectangular wave signal UP2 from the time ta to the inverter 2 as the switching signal UP. The switching signal Usig whose value is set to 0 continues to be outputted until time tb. Thus, in the period from the time ta to the time tb, the inverter 2 generates the current of U-phase 50U based on the one-pulse control. The period from the time ta to the time tb corresponds to a phase of 60 degrees.

Subsequently, in the period from the time tb to the time td, the switching controller 14 outputs the switching signal Usig whose value is set to 1 to the output switching unit 15. In the period from the time tb to the time td, the PWM signal UP1 is outputted to the inverter 2 as the switching signal UP, and the inverter 2 generates the current of the U-phase 50U based on the PWM control.

In the period from the time td to the time te, the switching controller 14 outputs the switching signal Usig whose value is set to 0 to the output switching unit 15. In the period from the time td to the time te, the rectangular wave signal UP2 is outputted to the inverter 2 as the switching signal UP, and the inverter 2 generates the current of the U-phase 50U based on the one-pulse control. The period from the time td to the time te corresponds to a phase of 60 degrees.

In the period from the time te to the time t2, the switching controller 14 outputs the switching signal Usig whose value is set to 1 to the output switching unit 15. In the period from the time te to the time t2, the PWM signal UP1 is outputted to the inverter 2 as the switching signal UP, and the inverter 2 generates the current of the U-phase 50U based on the PWM control.

In this way, the inverter control device 10 alternately switches the PWM control and the one-pulse control so that the period during which the U-phase 50U is continuously generated based on the one-pulse control corresponds to the phase of 60 degrees in the first half of the switching period.

Next, generation of the V-phase 50V in the first half of the switching period will be described.

Similarly to the generation of the U-phase 50U in the first half of the switching period, the switching controller 14 alternately switches the PWM control and the one-pulse control to generate the current of the V-phase 50V. More specifically, in the period from the time tc to the time td, the switching controller 14 causes the output switching unit 15 to output the rectangular wave signal VP2 as the switching signal VP, whereas during a period other than the above-described period, the switching controller 14 causes the output switching unit 15 to output the PWM signal VP1 as the switching signal VP. The period from the time tc to the time td corresponds to a phase of 60 degrees.

The time tc at which the output of the rectangular wave signal VP2 is started lags the time ta at which the output of the rectangular wave signal UP2 is started by the phase of 120 degrees. In other words, the switching controller 14 sets the period during which the switching signal Vsig is set to be 0 so as to be delayed by a time corresponding to the phase of 120 degrees from the period in which the switching signal Usig is set to 0. The reason for this is that the phase of the V-phase 50V lags the phase of the U-phase 50U by 120 degrees.

Next, generation of the W-phase 50W in the first half of the switching period will be described.

Similarly to the generation of the current of the U-phase 50U in the first half of the switching period, the switching controller 14 alternately switches the PWM control and the one-pulse control in order to generate the current of W-phase 50W. More specifically, in the period from the time te to the time t2, the switching controller 14 causes the output switching unit 15 to output the rectangular wave signal WP2 as the switching signal VP, whereas, in the other periods, the switching controller 14 causes the output switching unit 15 to output the PWM signal WP1 as the switching signal WP. The period from the time te to the time t2 corresponds to a phase of 60 degrees.

The time te at which the output of the rectangular wave signal WP2 is started lags the time tc at which the output of the rectangular wave signal VP2 is started by the phase of 120 degrees. In other words, the switching controller 14 sets the period during which the switching signal Wsig is set to be 0 so as to be delayed by a time corresponding to the phase of 120 degrees from the period in which the switching signal Vsig is set to 0. The reason for this is that the phase of the W-phase 50W lags the phase of the V-phase 50V by 120 degrees.

In this manner, the switching controller 14 alternately switches the PWM control and the one-pulse control in the order of the U-phase, the V-phase, and the W-phase. Note that the order of switching is not limited to the order described above, and may be the order of the V-phase, the W-phase, the U-phase, or the order of the W-phase, the V-phase, and the U-phase.

### Second half of switching period

Also in the second half of the switching period (the period from the time t2 to the time t3), the switching controller 14 alternately switches the PWM control and the one-pulse control as in the first half of the switching period. Thus, the period during which the output of the rectangular wave signal VP2 is started lags the period during which the output of the rectangular wave signal UP 2 is started by a time corresponding to the phase of 120 degrees. The period during which the output of the rectangular wave signal WP2 is started lags the period during which the output of the rectangular wave signal VP2 is started by a time corresponding to the phase of 120 degrees.

However, in the second half of the switching period, the period during which the one-pulse control is executed is a time corresponding to the phase of 120 degrees in each phase, and is set to be longer than the period in which the one-pulse control is executed in the first half of the switching period.

In the second half of the switching period, the interval at each time from time tf to time tk is a time corresponding to the phase of 60 degrees. Each of the period from the time t2 to the time tf and the period from the time tk to the time t3 is a time corresponding to the phase of 30 degrees.

First, generation of the U-phase 50U in the second half of the switching period will be described.

In order to execute one-pulse control, the switching controller 14 sets the switching signal Usig to 0 in the period from the time tf to the time th and in the period from the time ti to the time tk, and then instructs the output switching unit 15 to output the rectangular wave signal UP2. Each of the period from the time tf to the time th and the period from the time ti to the time tk corresponds to a time corresponding to the phase of 120 degrees. In the period from the time tf to the time th and the period from the time ti to the time tk, the inverter 2 generates the current of the U-phase 50U based on the one-pulse control.

Conversely, the switching controller 14 sets the switching signal Usig to 1 instructing the output of the PWM signal UP1 in the period from the time tf to the time th and periods other than the period from the time ti to the time tk. As a result, during the period from the time t2 to the time tf, the period from the time th to the time ti, and the period from the time tk to the time t3, the inverter 2 generates the current of the U-phase 50U based on the PWM control.

Next, generation of V phase 50V in the second half of the switching period will be described.

The switching controller 14 sets the switching signal Vsig to 0 instructing the output of the rectangular wave signal VP2 in the period from the time t2 to the time tg, the period from the time th to the time tj, and the period from the time tk to the time t3. In these periods, the inverter 2 generates the current of V-phase 50V based on the one-pulse control.

The period from the time th to the time tj is a time corresponding to the phase of 120 degrees. The total period of the period of the period from the time t2 to the time tg and the period from the time tk to the time t3 is a time corresponding to the phase of 120 degrees. In the second half of the switching period, the period during which the rectangular wave signal VP2 is outputted is divided. The reason for this is that the output period of the rectangular wave signal VP2 is set to lag the output period of the rectangular wave signal UP2 by 120 degrees

Conversely, in the period from the time tg to the time th and in the period from the time tj to the time tk, the switching controller 14 sets the switching signal Vsig to 1 instructing the output of the PWM signal VP1. In the period from the time tg to the time th and the period from the time tj to the time tk, the inverter 2 generates the current of the V-phase 50V based on the PWM control.

Next, generation of the W-phase 50W in the second half of the switching period will be described.

The switching controller 14 sets the switching signal Wsig to 0 instructing the output of the rectangular wave signal WP2 in the period from the time t2 to the time tf, the period from the time tg to the time ti, and the period from the time tj to the time t3. In these periods, the inverter 2 generates the current of W-phase 50W based on one-pulse control.

The period from the time tg to the time ti is a time corresponding to the phase of 120 degrees. The total period of the period of the period from the time t2 to the time tf and the period from the time tj to the time t3 is a time corresponding to the phase of 120 degrees. In this manner, in the second half of the switching period, the period during which the rectangular wave signal WP2 is output is divided. The reason for this is that the output period of the rectangular wave signal WP 2 is set to lag the output period of the rectangular wave signal VP2 by 120 degrees.

Conversely, the switching controller 14 sets the switching signal Wsig to 1 instructing the output of the PWM signal WP1 in the period from the time tf to the time tg and the period from the time ti to the time tj. As a result, during the period from the time tf to the time tg and the period from the time ti to the time tj, the inverter 2 generates the current of the W-phase 50W based on the PWM control.

### (3) Period after time t3 (one-pulse control period)

At time t 3, the switching period ends. After the time t3, the switching controller 14 outputs the control status signal St (St = 2) instructing execution of one-pulse control to the PWM controller 12, the one-pulse controller 13, and the torque estimation unit 16. When the control status signal St whose value is set to 2 is inputted, the PWM controller 12 stops generating the PWM signal 300. The torque estimation unit 16 starts to calculate the torque estimation value TrqFB. The one-pulse controller 13 executes feedback control using the torque estimation value TrqFB to generate the rectangular wave signal 400.

After the time t3, the switching controller 14 outputs the switching signals Usig, Vsig, and Wsig whose values are each set to 0. The output switching unit 15 outputs the rectangular wave signal 400 inputted from the one-pulse controller 13 to the inverter 2 as the switching signal Sw based on the switching signals Usig, Vsig, and Wsig whose values are each set to 0. In other words, in the period after the time t3, the inverter control device 10 executes one-pulse control, thereby controlling the inverter 2.

Hereinafter, the reason why the PWM control and the one-pulse control are alternately switched in the switching period will be described.

When the inverter control device 10 immediately switches from execution of PWM control to execution of one-pulse control while the AC motor 1 is being driven, a torque shock occurs.

When the inverter 2 generates the three-phase alternating current 200 by the PWM control, the currents of the U-phase 50U, the V-phase 50V, and the W-phase 50W maintain equilibrium. However, when the switching from the PWM control to the one-pulse control is executed immediately, the currents of U-phase 50U, V-phase 50V, and W-phase 50W become unbalanced.

Referring to FIG. 3, an exemplary case where the PWM control is immediately switched to the one-pulse control at time t1 will be discussed. In this case, before the time t1, the U-phase 50U, the V-phase 50V, and the W-phase 50W are generated by the PWM control. In this case, the on/off operation of the switching element in the inverter 2 is executed at very short intervals as compared with the one-pulse control. Thus, in the PWM control period, the currents of the U-phase 50U, the V-phase 50V, and the W-phase 50W can be balanced in the inverter 2.

However, when the PWM control is immediately switched to the one-pulse control at the time t1, the rectangular wave signal 400 is outputted to the inverter 2 from the time t1. In a period from the time t1 to the time ta, the rectangular wave signals UP2 and WP2 in the rectangular wave signal 400 are off and the rectangular wave signal VP2 is on, so that a current is generated only in the V-phase 50V. As a result, the current of V-phase 50V becomes excessive from time t1, so that the currents of U-phase 50U, V-phase 50V, and W-phase 50W become unbalanced. As a result, the torque of the AC motor 1 suddenly changes, and a torque shock occurs.

However, when switching from the PWM control to the one-pulse control, the inverter control device 10 alternately switches the PWM control and the one-pulse control in the switching period. At that time, the timing of switching to the one-pulse control is shifted for each phase of the rectangular wave signal 400 and then the switching is executed. This reduces the torque shock. For example, as shown in FIG. 3, in the period from the time ta to the time tb, the rectangular wave signal UP2 is outputted from the inverter control device 10 as the switching signal UP, and the PWM signals VP1 and WP1 are outputted from the inverter control device 10 as the switching signals VP and WP.

As a result, two phases of the U-phase 50U, the V-phase 50V, and the W-phase 50W are generated by the PWM control. It is possible to alleviate the imbalance in the currents of the U-phase 50U, the V-phase 50V, and the W-phase 50W as compared with the case where the PWM control is immediately switched to the one-pulse control, thereby reducing the torque shock.

Also, in the second half of the switching period, the ratio of the period during which the rectangular wave signal 400 is outputted is increased compared to the first half of the switching period. In the inverter control device 10, stepwisely increasing the ratio of one-pulse control enables shifting to one-pulse control while mitigating the imbalance of the current of the three-phase alternating current generated at the time of switching from the PWM control to the-one pulse control. This further reduces the torque shock.

### {2.2.3. Operation of PWM controller 12 in Switching Period}

In the switching period, the PWM controller 12 gradually changes the voltage target values Vd and Vq from a value corresponding to PWM control to a value corresponding to one-pulse control. The reason why the PWM controller 12 gradually changes the voltage target values Vd and Vq will be described below.

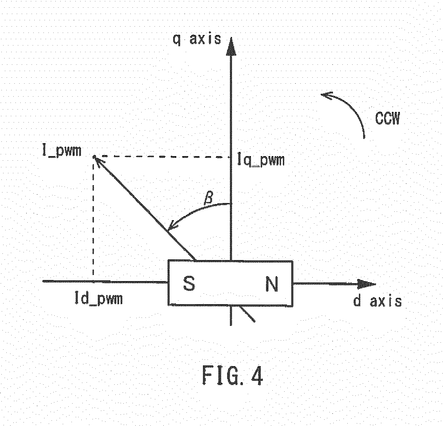

FIG. 4 is a diagram showing the current vector Lpwm calculated based on the torque command value TrqRef in the dq coordinates space when PWM control is executed. Referring to FIG. 4, the d-axis component of the current vector I_pwm is set as the current target value Id_pwm, and the q-axis component of the current vector I_pwm is set as Iq_pwm. The current target values Id_pwm and Iq_pwm respectively correspond to the current target values Id_r and Iq_r generated by the current command generation unit 11. The current vector I_pwm is positioned in the counterclockwise (CCW) direction with respect to the q-axis. The angle formed by the current vector I_pwm and the q-axis is β.

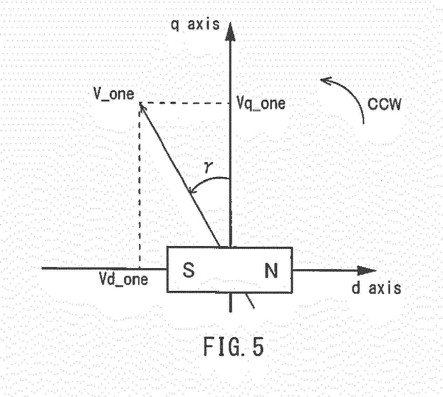

' FIG. 5 is a diagram showing the voltage vector V_one calculated based on the torque command value TrqRef in the dq coordinates space when the one-pulse control is executed. Referring to FIG. 5, the d-axis component of the voltage vector V_one is set as the voltage target value Vd_one and the q-axis component of the voltage vector V_one is set as Vq_one. The voltage vector V_one is positioned in the counterclockwise (CCW) direction with respect to the q-axis. The angle formed by the voltage vector V_one with the q-axis is γ. The voltage target values Vd_one and Vq_one are not actually used in the one-pulse controller 13.

In the PWM control, the angle β is set so as to maximize the efficiency in the AC motor 1. Conversely, the one-pulse control controls the torque of the AC motor 1 by adjusting the phase of the rectangular wave. Thus, the angle γ changes in accordance with the torque command value TrqRef, so that the angle β used in the PWM control does not agree with the angle γ used in the one-pulse control.

As a result, when PWM control is switched to one-pulse control, the phase of the three-phase alternating current 200 generated by the inverter 2 by the PWM control does not agree with the phase of the three-phase alternating current 200 generated by the inverter 2 by one-pulse control. The difference between these two phase shifts are a cause of the occurrence of the torque shock.

Even when the inverter control device 10 alternately switches the PWM control and the one-pulse control in the switching period, a torque shock due to a phase shift occurs. Thus, the inverter control device 10 gradually brings the voltage target values Vd and Vq close to the voltage target values Vd_one and Vq_one used in the one-pulse control in the switching period. As a result, the shift between the two phases is reduced, so that the torque shock occurring during the switching period can be reduced.

Referring to FIG. 2, when the control status signal St (St = 1) notifying the execution of switching control is inputted, the PI control unit 122A determines the voltage target value Vq in the switching period through the following processing.

The PI control unit 122A calculates the voltage target value Vq_pwm and the voltage target value Vq_one based on the current difference value Iq_s. The voltage target value Vq_pwm corresponds to the voltage target value Vq at the time of executing the PWM control.

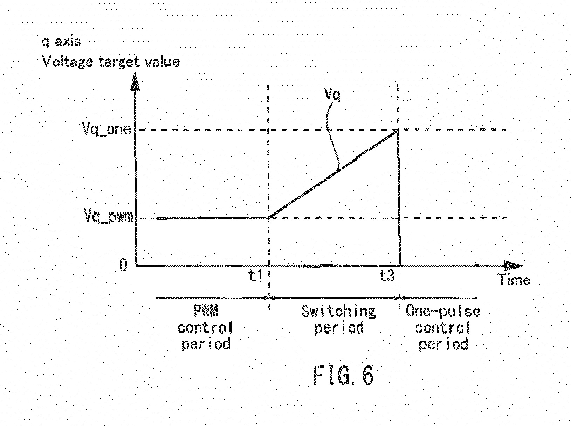

FIG. 6 is a diagram showing changes in the voltage target value Vq during the switching period. Referring to FIG. 6, the PI control unit 122 A sets voltage target value Vq to the voltage target value Vq_pwm at time t1 at which switching control is started. Then, at time t3 at which the switching period ends, the PI control unit 122A gradually changes the voltage target value Vq so that the voltage target value Vq becomes the voltage target value Vq_one. The PWM control is not executed after the switching period ends, and thus the PI control unit 122A sets the voltage target value Vq to 0 after the time t3.

The PI control unit 122B executes the same processing as one executed by the PI control unit 122A to change the voltage target value Vd. The PI control unit 122B calculates the voltage target value Vd_pwm and the voltage target value Vd_one based on the current difference value Id_s. The voltage target value Vd_pwm corresponds to the voltage target value Vd at the time of executing the PWM control.

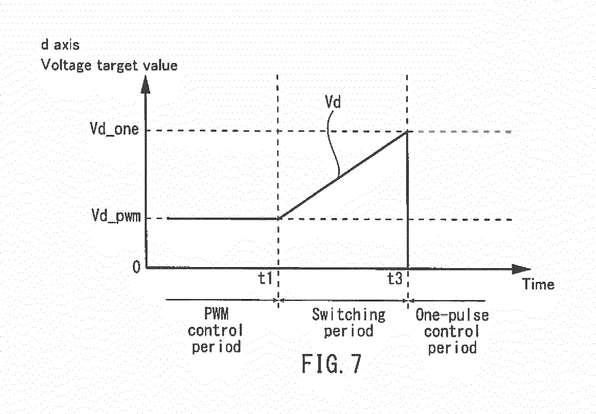

FIG. 7 is a diagram showing changes in the voltage target value Vd during the switching period. Referring to FIG. 7, the PI control unit 122B sets voltage target value Vd to voltage target value Vd_pwm at time t1 at which switching control is started. Then, at time t3 at which the switching period ends, the PI control unit 122B gradually changes the voltage target value Vd so that the voltage target value Vd becomes the voltage target value Vd_one. The PWM control is not executed after the switching period ends, the PI control unit 122 B sets the voltage target value Vd to 0 after the time t3.

In FIG. 6, although the voltage target value Vq_pwm is smaller than the voltage target value Vq_one, the voltage target value Vq_pwm may be larger than the voltage target value Vq_one. Furthermore, the PI control unit 122A may change the voltage target value Vq quadratically or exponentially, instead of changing it linearly. The same applies to the voltage target value Vd_pwm and the voltage target value Vd_one shown in FIG. 7.

In this way, changing the voltage target values Vq and Vd by the PI control units 122 A and 122 B during the switching period reduces the torque shock occurring at the time of switching between the PWM control and the one-pulse control within the switching period .

### {2.2.4. Operation of One-pulse controller 13 in Switching Period}

In the switching period, the one-pulse controller 13 does not execute feedback control using the torque command value TrqRef and the torque estimation value TrqFB; instead, it starts feedback control at the timing when the switching period ends. Hereinafter, it will be described in detail.

### (Operation in Switching Period)

In the switching period, the one-pulse controller 13 outputs a rectangular wave signal 400 with a fixed phase. More specifically, when receiving the control status signal St (St = 1) indicating the execution of the switching control from the switching controller 14, the torque estimation unit 16 does not calculate the torque estimation value TrqFB. As a result, subtraction processing is not executed in the subtracter 131. The subtracter 131 outputs the torque command value TrqRef as it is as the torque difference value Trq_s. As described later, the PI control unit 132 does not calculate the phase target value γ1 using the torque difference value Trq_s during the switching period. Thus, the one-pulse controller 13 may stop the operation of the subtracter 131.

When receiving the control status signal St (St = 1) indicating the execution of the switching control from the switching controller 14, the PI control unit 132 generates the phase target value γ1 set to zero, regardless of the torque difference value Trq_s to outputs the phase target value γ1.

The initial phase table 133 outputs the initial phase value γ2 based on the torque command value TrqRef while receiving the control status signal St (St = 1) instructing the switching control. The phase target value γ1 whose value is set to zero and the initial phase value γ2 based on the torque command value TrqRef are inputted to the adder 134, and thus the adder 134 outputs the initial phase value γ2 as the voltage phase value γ3. The rectangular wave generating circuit 135 generates the rectangular wave signal 400 based on the voltage phase value γ3. In other words, in the switching period, the voltage phase value γ3 is fixed to the initial phase value γ2.

### (Operation at End of Switching Period)

At the timing when the switching period ends, the switching controller 14 outputs the control status signal St (St = 2) instructing execution of one-pulse control to the one-pulse controller 13. When receiving the control status signal St (St = 2) instructing execution of one-pulse control, the initial phase table 133 outputs the initial phase value γ2 corresponding to the torque command value TrqRef to the adder 134.
At this timing, the phase target value γ1 whose value is set to zero has been inputted to the adder 134. Thus, at the timing when the switching period ends, the adder 134 outputs the initial phase value γ2 as it is to the rectangular wave generating circuit 135 as the voltage phase value γ3. The rectangular wave generating circuit 135 outputs the rectangular wave signal 400 whose phase is adjusted based on the initial phase value γ2.

The initial phase value γ2 is a value calculated in advance so that the AC motor 1 can output a torque corresponding to the torque command value TrqRef. At time t3 when the one-pulse control period is started, the one-pulse controller 13 can generate the rectangular wave signal 400 in accordance with the torque command value TrqRef, thereby reducing the torque shock.

When receiving the control status signal St (St = 2) instructing execution of one-pulse control, the torque estimation unit 16 starts to output the torque estimation value TrqFB. When receiving the control status signal St (St = 2) instructing execution of one-pulse control, the PI control unit 132 uses the torque difference value Trq_s obtained by subtracting the torque estimation value TrqFB from the torque command value TrqRef to calculate the phase target value γ1. As a result, the closed loop control is started in the one-pulse controller 13. More specifically, the PI control unit 132 calculates the phase target value γ1 based on the torque difference value Trq_s obtained by subtracting the torque estimation value TrqFB from the torque command value TrqRef.

The initial phase table 133 continuously outputs the initial phase value γ2 corresponding to the torque command value TrqRef while receiving the control status signal St (St = 2) instructing execution of one-pulse control. The adder 134 outputs the voltage phase value γ3 by adding the initial phase value γ2 to the phase target value γ1. The rectangular wave generating circuit 135 generates the rectangular wave signal 400 based on the voltage phase value γ3. As a result, at the start of one-pulse control, the rectangular wave signal 400 reflecting only the initial phase value γ2 is generated, and subsequently, the rectangular wave signal 400 whose phase is adjusted based on the feedback control is generated.

### (Modification)

In the above embodiment, an example in which the switching period is set to two cyclic periods of the rectangular wave signal 400 has been described, but the present invention is not limited to this example. The switching period may be one cyclic period of the rectangular wave signal 400 or three or more cyclic periods.

When the switching period is three cyclic periods or more, the inverter control device 10 may gradually lengthen the period during which the one-pulse control is executed in each cyclic period. For example, when the switching period is 4 cyclic periods, the execution period of one-pulse control in the first cyclic period may be set to be a period corresponding to 30 degrees, the execution period of one-pulse control in the second cyclic period may be set to be a period corresponding to 60 degrees, the execution period of one-pulse control in the third cycle may be set to be a period corresponding to 90 degrees, and the execution period of one-pulse control in the fourth cycle may be set to be a period corresponding to 120 degrees.

Furthermore, the switching period may not be determined depending on the period of the rectangular wave signal 400. The switching controller 14 may arbitrarily set the switching period.

In the above embodiment, a case in which the inverter control device 10 sets the period during which the one-pulse control is executed twice or more for each of the U-phase, the V-phase, and the W-phase in the switching period has been described; however, the present invention is not limited to this case. The inverter control device 10 may alternately switch the PWM control and the one-pulse control so that the one-pulse control is executed at least once. Even in this case, the unbalance of the three-phase alternating current 200 is reduced in the switching period, thereby reducing the torque shock. Note that when one-pulse control is executed during the switching period, the PWM control is executed at least once after one-pulse control.

Further, in the above embodiment, a case in which the switching controller 14 sets the period during which the rectangular wave signal UP2 is output twice in the first half of the switching period, and each of the periods in which the rectangular wave signal UP2 is outputted is a time corresponding to the phase of 60 degrees has been described; however, the present invention is not limited to this case. The period during which the second rectangular wave signal UP2 is outputted may be longer than the period during which the first rectangular wave signal UP2 is outputted. The same applies to the rectangular wave signals VP2 and WP2. Thus, in the switching period, the ratio of the period during which the rectangular wave signal UP2 is outputted is gradually increased, so that the torque shock can be further reduced. In other words, when the switching to one-pulse control in the switching period is N-th (N is a natural number equal to or greater than 2) switching, the switching controller 14 alternately switches the PWM control and the one-pulse control so that the execution period of the one-pulse control after N-th switching becomes longer than the execution period of the one-pulse control after (N-1)-th switching.

Furthermore, in the above embodiment, a case in which the AC motor 1 is an IPM motor has been described; however, the present invention is not limited to this case. The AC motor 1 may be an SPM (Surface Permanent Magnet) motor. In other words, it is possible to use the inverter control device 10 when a motor using a permanent magnet is driven.

Each block of the inverter control device 10 in the above embodiment may be formed using a single chip with a semiconductor device, such as an LSI (large-scale integration) device, or some or all of the blocks of the state estimation system may be formed using a single chip.

Although LSI is used as the semiconductor device technology, the technology may be an IC (integrated circuit), a system LSI, a super LSI, or an ultra LSI depending on the degree of integration of the circuit.

The circuit integration technology employed should not be limited to LSI, but the circuit integration may be achieved using a dedicated circuit or a general-purpose processor. A field programmable gate array (FPGA), which' is an LSI circuit programmable after manufactured, or a reconfigurable processor, which is an LSI circuit in which internal circuit cells are reconfigurable or more specifically the internal circuit cells can be reconnected or reset, may be used.

All or part of the processing of the functional blocks described in the above can may be achieved using a program. All or part of the processes performed by the functional blocks described in the above embodiments may be implemented by a central processing unit (CPU) in a computer. The programs for these processes may be stored in a storage device, such as a hard disk or a ROM, and may be executed from the ROM or be read into a RAM and then executed. Alternatively, all or part of the processes performed by the functional blocks described in the above embodiments may be implemented by a digital signal processor (DSP) in a computer.

The processes described in the above embodiment may be implemented by using either hardware or software (including use of an operating system (OS), middleware, or a predetermined library), or may be implemented using both software and hardware.

The processes described in the above embodiment may not be performed in the order specified in the above embodiments.

The present invention may also include a computer program enabling a computer to implement the method described in the above embodiments and a computer readable recording medium on which such a program is recorded. Examples of the computer readable recording medium include a flexible disk, a hard disk, a CD-ROM, an MO, a DVD, a DVD-ROM, a DVD-RAM, a large capacity DVD, a next-generation DVD, and a semiconductor memory.

The computer program may not be recorded on the recording medium but may be transmitted with an electric communication line, a wireless or wired communication line, or a network such as the Internet.

Although the embodiment of the present invention has been described above, the above-described embodiment is merely an example for implementing the present invention.

## Claims

1. An inverter control device for controlling an inverter (2) that generates three-phase alternating current for driving a motor (1), comprising:
a PWM controller (12) configured to execute PWM control based on a torque command value of the motor (1) to cause the inverter (2) to generate the three-phase alternating current;
a one-pulse controller (13) configured to execute one-pulse control based on the torque command value to cause the inverter (2) to generate the three-phase alternating current; and
a switching controller (14) configured to alternately switch the PWM control and the one-pulse control in a switching period with a preset time length for switching the control of the inverter (2) from the PWM control to the one-pulse control, and configured to control the PWM controller (12) and the one-pulse controller (13) so that the one-pulse control is executed after a lapse of the switching period, wherein
the switching controller (14) is configured to control the PWM controller (12) and the one-pulse controller (13) by, in the switching period, gradually increasing a ratio of the period during which one-pulse control is executed;
**characterized by**
an output switching unit (15), wherein
the PWM controller (12) is configured to output a PWM signal (300) to the output switching unit (15);
the one-pulse controller (13) is configured to output a rectangular wave signal (400) to the output switching unit (15); and
the switching controller (14) is configured to output switching signals (Usig, Vsig, Wsig) to the output switching unit (15) for instructing the output switching unit (15) for outputting one of the PWM signal (300) and the rectangular wave signal (400), wherein
the PWM signal (300) and the rectangular wave signal (400) are alternately switched in the switching period; and
based on the switching signals (Usig, Vsig, Wsg), the output switching unit (15) outputs either the PWM signal (300) or the rectangular wave signal (400) to the inverter (2).

2. The inverter control device according to claim 1, wherein
an instruction by the switching controller (14) is made in a predetermined order for each phase included in the three-phase alternating current.

3. The inverter control device according to claim 1 or 2, wherein
the PWM controller (12) is configured to generate a first voltage target value used for the PWM control and a second voltage target value used for the one-pulse control based on the torque command value, and gradually changes, in the switching period, the first voltage target value to the second voltage target value.

4. The inverter control device according to any one of claims 1 to 3, further comprising:
an initial phase table (133) configured to store the torque command value and an initial phase value of a rectangular wave signal (400) for driving the inverter (2) by the one-pulse control at a timing of starting the one-pulse control in association with each other, and wherein
the one-pulse controller (13) is configured to determine a phase of the rectangular wave signal (400) based on the initial phase value corresponding to the torque command value at the timing of ending the switching period and configured to determine, after the elapse of the switching period, a phase of the rectangular wave signal (400) based on the torque command value, a detected value of the torque of the motor (1), and the initial phase value corresponding to the torque command value.

## Patentansprüche

1. Wechselrichtersteuervorrichtung zum Steuern eines Wechselrichters (2), der Dreiphasen-Wechselstrom zum Antreiben eines Motors (1) erzeugt, umfassend:
eine PWM-Steuereinheit (12), die eingerichtet ist, PWM-Steuerung auf Grundlage eines Drehmomentbefehlswerts des Motors (1) auszuführen, um den Wechselrichter (2) zu veranlassen, den Dreiphasen-Wechselstrom zu erzeugen;
eine Einzelpulssteuereinheit (13), die eingerichtet ist, Einzelpulssteuerung auf Grundlage des Drehmomentbefehlswerts auszuführen, um den Wechselrichter (2) zu veranlassen, den Dreiphasen-Wechselstrom zu erzeugen; und
eine Umschaltsteuereinheit (14), die eingerichtet ist, die PWM-Steuerung und die Einzelpulssteuerung in einem Umschaltzeitraum mit einer voreingestellten Zeitlänge alternierend umzuschalten, um die Steuerung des Wechselrichters (2) von der PWM-Steuerung zu der Einzelpulssteuerung umzuschalten, und die eingerichtet ist, die PWM-Steuereinheit (12) und die Einzelpulssteuereinheit (13) so zu steuern, dass die Einzelpulssteuerung nach einem Ablaufen des Umschaltzeitraums ausgeführt wird, wobei
die Umschaltsteuereinheit (14) eingerichtet ist, die PWM-Steuereinheit (12) und die Einzelpulssteuereinheit (13) zu steuern, indem, in dem Umschaltzeitraum, ein Anteil des Zeitraums, während dem Einzelpulssteuerung ausgeführt wird, graduell vergrößert wird;
**gekennzeichnet durch**
eine Ausgabeumschalteinheit (15), wobei
die PWM-Steuereinheit (12) eingerichtet ist, ein PWM-Signal (300) an die Ausgabeumschalteinheit (15) auszugeben;
die Einzelpulssteuereinheit (13) eingerichtet ist, ein Rechteckschwingungssignal (400) an die Ausgabeumschalteinheit (15) auszugeben; und
die Umschaltsteuereinheit (14) eingerichtet ist, Ausgabeumschaltsignale (Usig, Vsig, Wsig) an die Ausgabeumschalteinheit (15) auszugeben, um die Ausgabeumschalteinheit (15) anzuweisen, eines des PWM-Signals (300) und des Rechteckschwingungssignals (400) auszugeben, wobei
das PWM-Signal (300) und das Rechteckschwingungssignal (400) in dem Umschaltzeitraum alternierend umgeschaltet werden; und
die Ausgabeumschalteinheit (15) auf Grundlage der Umschaltsignale (Usig, Vsig, Wsig) entweder das PWM-Signal (300) oder das Rechteckschwingungssignal (400) an den Wechselrichter (2) ausgibt.

2. Wechselrichtersteuervorrichtung nach Anspruch 1, wobei
eine Anweisung durch die Umschaltsteuereinheit (14) in einer vorbestimmten Reihenfolge für jede Phase gemacht wird, die in dem Dreiphasen-Wechselstrom enthalten ist.

3. Wechselrichtersteuervorrichtung nach Anspruch 1 oder 2, wobei
die PWM-Steuereinheit (12) eingerichtet ist, einen ersten Spannungszielwert, der für die PWM-Steuerung verwendet wird, und einen zweiten Spannungszielwert, der für die Einzelpulssteuerung verwendet wird, auf Grundlage des Drehmomentbefehlswerts zu erzeugen, und graduell, in dem Umschaltzeitraum, den ersten Spannungszielwert auf den zweiten Spannungszielwert ändert.

4. Wechselrichtersteuervorrichtung nach einem der Ansprüche 1 bis 3, ferner umfassend:
eine Anfangsphasentabelle (133), die eingerichtet ist, den Drehmomentbefehlswert und einen Anfangsphasenwert eines Rechteckschwingungssignals (400) zum Antreiben des Wechselrichters (2) durch die Einzelpulssteuerung zu einer Anfangszeit der Einzelpulssteuerung in Zuordnung zueinander zu speichern, und wobei
die Einzelpulssteuereinheit (13) eingerichtet ist, eine Phase des Rechteckschwingungssignals (300) zu bestimmen, auf Grundlage des Anfangsphasenwerts, der dem Drehmomentbefehlswert zu der Beendigungszeit des Umschaltzeitraums entspricht, und eingerichtet ist, nach dem Ablaufen des Umschaltzeitraums, eine Phase des Rechteckschwingungssignals (400) zu bestimmen, auf Grundlage des Drehmomentbefehlswerts, eines erkannten Werts des Drehmoments des Motors (1), und des Anfangsphasenwerts entsprechend dem Drehmomentbefehlswert.

## Revendications

1. Dispositif de commande d'onduleur destiné à piloter un onduleur (2) qui génère un courant alternatif triphasé permettant d'attaquer un moteur (1), comprenant :
un contrôleur à modulation PWM (12) configuré pour réaliser une commande à modulation PWM sur la base d'une valeur d'instruction de couple du moteur (1) afin d'amener l'onduleur (2) à générer le courant alternatif triphasé,
un contrôleur mono-impulsion (13) configuré pour exécuter une commande mono-impulsion fondée sur la valeur d'instruction de couple afin d'amener l'onduleur (2) à générer le courant alternatif triphasé, et
un contrôleur de commutation (14) configuré pour commuter alternativement la commande à modulation PWM et la commande mono-impulsion dans une période de commutation avec une durée de longueur préréglée permettant de commuter la commande de l'onduleur (2) de la commande à modulation PWM à la commande mono-impulsion, et configuré pour commander le contrôleur à modulation PWM (12) et le contrôleur mono-impulsion (13) de sorte à ce que la commande mono-impulsion soit exécutée après l'écoulement de la période de commutation, dans lequel
le contrôleur de commutation (14) est configuré pour commander le contrôleur à modulation PWM (12) et le contrôleur mono-impulsion (13) en augmentant progressivement, dans la période de commutation, le rapport de la période pendant laquelle est exécutée la commande mono-impulsion,
**caractérisé par** :
une unité de commutation de sortie (15), dans laquelle
le contrôleur à modulation PWM (12) est configuré pour délivrer un signal à modulation PWM (300) à l'unité de commutation de sortie (15),
le contrôleur mono-impulsion (13) est configuré pour délivrer un signal rectangulaire (400) à l'unité de commutation de sortie (15), et
le contrôleur de commutation (14) est configuré pour délivrer des signaux de commutation (Usig, Vsig, Wsig) à l'unité de commutation de sortie (15) afin d'ordonner à l'unité de commutation de sortie (15) de délivrer en sortie l'un du signal à modulation PWM (300) et du signal rectangulaire (400), où
le signal à modulation PWM (300) et le signal rectangulaire (400) sont commutés alternativement dans la période de commutation, et
sur la base des signaux de commutation (Usig, Vsig, Wsig), l'unité de commutation de sortie (15) délivre en sortie à l'onduleur (2) soit le signal à modulation PWM (300), soit le signal rectangulaire (400).

2. Dispositif de commande d'onduleur selon la revendication 1, dans lequel :
une instruction élaborée par le contrôleur de commutation (14) est réalisée selon un ordre prédéterminé pour chaque phase inclue dans le courant alternatif triphasé

3. Dispositif de commande d'onduleur selon la revendication 1 ou la revendication 2, dans lequel :
le contrôleur à modulation PWM (12) est configuré pour générer une première valeur cible de tension utilisée pour la commande à modulation PWM et une seconde valeur cible de tension utilisée pour la commande mono-impulsion sur la base de la valeur d'instruction de couple, et il convertit progressivement, dans la période de commutation, la première valeur cible de tension en seconde valeur cible de tension.

4. Dispositif de commande d'onduleur selon l'une quelconque des revendications 1 à 3, comprenant en outre :
une table de phase initiale (133), configurée pour stocker la valeur d'instruction de couple et une valeur de phase initiale du signal rectangulaire (400) destinée à attaquer l'onduleur (2) par la commande-impulsion avec un séquencement consistant à démarrer la commande mono-impulsion par association de l'une avec l'autre, et où
le contrôleur mono-impulsion (13) est configuré pour déterminer la phase du signal rectangulaire (400) sur la base de la valeur de phase initiale correspondant à la valeur d'instruction de couple avec le séquencement constitué par la fin de la période de commutation, et configuré pour déterminer, après l'écoulement de la période de commutation, la phase du signal rectangulaire (400) sur la base de la valeur d'instruction de couple, d'une valeur détectée du couple du moteur (1) et de la valeur de phase initiale correspondant à la valeur d'instruction de couple.
